# FASCICULE DE BREVET EUROPEEN

(11) **EP 2 748 441 B1**
(45) Date de publication et mention de la délivrance du brevet: **15.11.2017**
(21) Numéro de dépôt: 12750427.2
(22) Date de dépôt: 19.07.2012
(51) Int. Cl.: F01N 13/10, F01N 3/30, F01N 3/34

(54) **SYSTÈME D'ADMISSION D'AIR À L'ÉCHAPPEMENT**
SYSTEM ZUM ANSAUGEN VON LUFT INS ABGAS
SYSTEM FOR THE INTAKE OF AIR TO THE EXHAUST

(30) Priorité: 25.08.2011 FR 1157523
(43) Date de publication de la demande: 02.07.2014
(73) Titulaire: Renault S.A.S., 92100 Boulogne-Billancourt (FR)
(72) Inventeur: DUMAS, Eric, F-78800 Houilles (FR); JUDITH, Jean-Louis, F-92300 Levaillois-perret (FR); ROSSI, Bertrand, F-92500 Rueil Mailmaison (FR)
(86) Numéro de dépôt international: PCT/FR2012/051720
(87) Numéro de publication internationale: WO 2013/026968

(56) Documents cités:
- WO-A1-00/25006
- DE-U1- 8 914 153
- US-A- 3 522 702
- US-A- 5 768 890

## Description

### Domaine technique de l'invention

La présente invention concerne un système d'admission d'air dans les conduits d'échappement de gaz de moteur à combustion interne.

L'invention concerne plus particulièrement un système d'admission d'air disposé près d'un collecteur d'échappement de moteur à combustion interne.

L'invention concerne également un moteur à combustion interne comportant un système d'admission d'air à l'échappement.

### Etat de la technique

Les moteurs à combustion doivent satisfaire des normes de pollution de plus en plus sévères. Ils sont alors pourvus de systèmes destinés à dépolluer les gaz d'échappement rejetés en fin de combustion. Parmi ces systèmes, pour les moteurs à essence, le pot catalytique ou catalyseur est destiné à éliminer des composés toxiques tels que le monoxyde de carbone, les oxydes d'azote ou des hydrocarbures imbrulés, contenus dans les gaz d'échappement en sortie de la chambre à combustion par oxydation avec de l'oxygène encore présent dans ces gaz. Toutefois pendant les phases de démarrages, le taux d'oxygène contenu dans les gaz d'échappement est particulièrement faible et l'oxydation est peu efficace. Pour améliorer le processus d'oxydation, lors des phases de démarrages, des systèmes d'admission d'air sont disposés entre la chambre à combustion et le pot catalytique. Ces systèmes insufflent de l'air dans les conduits d'échappement en sortie de la chambre à combustion afin d'augmenter le taux d'oxygène dans les gaz d'échappement avant leur entrée dans le pot catalytique. L'air est insufflé, de manière préférentielle juste après les soupapes d'échappement d'un cylindre, afin que le gaz d'échappement et l'air soient mélangés à une température la plus élevée possible afin de faciliter la phase d'oxydation en aval. Ces systèmes d'admission sont composés d'une pompe à air insufflant de l'air dans une chambre d'admission comportant des orifices vers les conduits d'échappement. L'air introduit dans ladite chambre est distribué ensuite par les orifices. La distribution d'air n'est pas optimale du fait que des sections de passage d'air de la chambre d'admission sont différentes tout au long de la chambre, entrainant des débits d'air sensiblement différents par les différents orifices. Les mélanges d'air et de gaz sont alors sensiblement différents, d'un cylindre à l'autre, ce qui entraine une efficacité moindre du pot catalytique.

Le collecteur d'échappement est réalisé par moulage sable. Le moule comporte un premier moule sable qui réalise la surface externe du collecteur d'échappement et un deuxième moule qui réalise la surface interne d'une chambre de collecte des gaz. Le collecteur peut comporter également la chambre d'admission : un troisième moule qui réalise la chambre d'admission ainsi que l'entrée d'air dans ladite chambre est alors disposé par exemple en dessous du deuxième moule de la chambre de collecte.

Une solution pour assurer une distribution d'air avec des débits sensiblement égaux dans les orifices de la chambre vers les conduits d'échappement peut consister en une définition des sections transversales de passage d'air produisant des pertes de charges pouvant entrainer la redirection de l'air vers certains orifices de sortie. Cette solution implique que les différentes dimensions de section de passage soient suffisamment importantes compte tenu des contraintes de moulage du collecteur d'échappement.

La publication WO 00/25006-A1 divulgue un système d'admission d'air fixé à une culasse comportant une chambre d'admission longitudinale, disposée transversalement à l'écoulement des gaz d'échappement qui comporte une entrée d'air et des orifices de sortie vers des conduits d'admission d'air,

Un but de l'invention est de pallier ces inconvénients et l'invention a pour objet un système d'admission d'air qui permet d'avoir des débits sensiblement homogènes par tous les orifices de sortie d'air de la chambre vers les conduits d'échappement.

L'objet de l'invention est caractérisé plus particulièrement par un système peu cher permettant de diriger le flot d'air vers des orifices de sortie.

### Bref résumé de l'invention

L'invention a pour objet un système d'admission d'air à l'échappement d'un moteur à combustion interne comprenant un collecteur d'échappement comportant une chambre d'admission longitudinale, disposée transversalement à l'écoulement des gaz d'échappement et fermée par une paroi rapportée, qui comporte une entrée d'air à une extrémité et des orifices le long de la chambre dans le sens d'écoulement d'air, de sortie vers des conduits d'échappement d'air,
caractérisé en ce qu'au moins une section de passage d'air dans la chambre à proximité et en aval de l'endroit où se trouve un orifice est partiellement obstruée par un déflecteur, le déflecteur étant constitué par une paroi d'obstruction au moins partiellement transversale au sens d'écoulement d'air, la paroi d'obstruction étant inclinée contre le sens d'écoulement d'air, grâce à quoi l'air est dirigé vers l'orifice.

Selon des caractéristiques particulières de l'invention :
La chambre d'admission est formée par une cavité aménagée à proximité d'une chambre de collecte des gaz du collecteur d'échappement.

La paroi d'obstruction s'étend depuis une paroi de la chambre à proximité et en aval de l'endroit où se trouve l'orifice de sortie selon le sens d'écoulement d'air.

La paroi d'obstruction est rapportée sur la paroi fermant la chambre.

La paroi d'obstruction et la paroi fermant la chambre sont réalisées en une seule pièce.

La paroi fermant la chambre est réalisée par un joint d'étanchéité.

Le joint d'étanchéité est réalisé en acier.

La paroi fermant la chambre comprend une nervure d'étanchéité entourant les orifices de sortie d'air.

### Brève description des figures

D'autres aspects de l'invention vont être présentés dans la description qui suit en regard des dessins annexés, donnée à titre d'exemple non limitatif dans le but de bien comprendre l'invention et comment elle peut être réalisée.
La figure 1 est une vue en perspective d'un collecteur d'échappement fixé sur une culasse.
La figure 2 est une vue en perspective du collecteur d'échappement.
La figure 3 est un schéma de la chambre d'admission d'air.
Les figures 4 et 5 sont des schémas du joint entre le collecteur d'échappement et la culasse.

### Description détaillée des figures

Les descriptions qui suivent se réfèrent à un axe longitudinal X de la chambre d'admission d'air.

Les mêmes éléments apparaissant dans des figures différentes gardent les mêmes références.

La description suivante est faite sur un exemple d'un moteur à carburation essence comportant trois cylindres mais l'invention n'est pas limitée à un moteur avec ce nombre de cylindres.

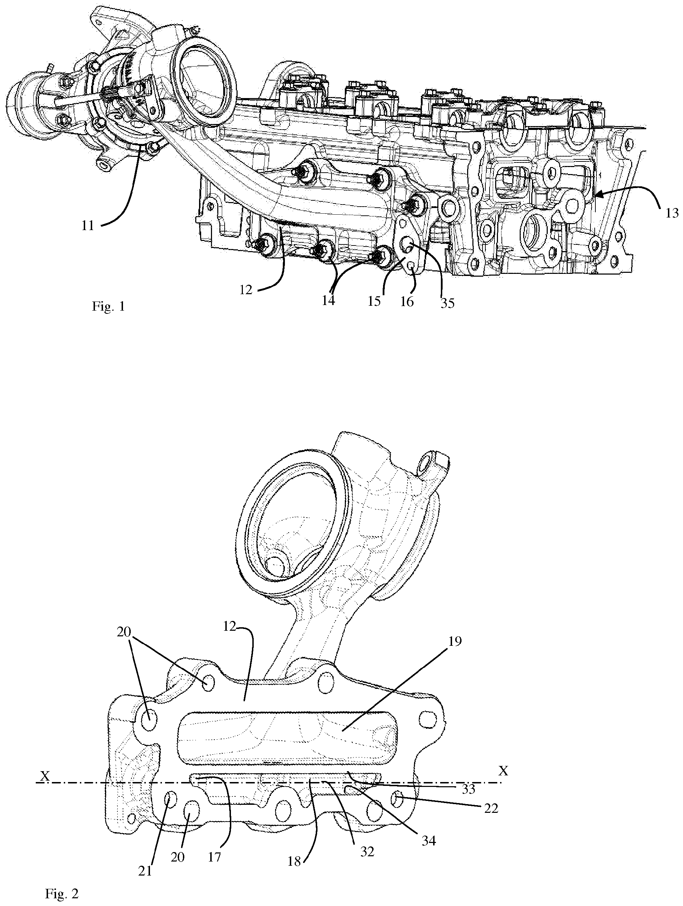

Selon la figure 1, un pot catalytique 11 est fixé en bout d'un tube reliant un collecteur d'échappement 12 qui est fixé à une culasse 13 par des vis 14. Le collecteur est aménagé pour recueillir les gaz d'échappement issus des chambres à combustion disposés dans des cylindres pour les diriger vers le pot catalytique 11 afin d'être traités par oxydation des composés toxiques. Le collecteur d'échappement comporte également un conduit d'entrée 35 débouchant au dehors d'une plaque de fixation 15, ladite plaque comporte des orifices traversant 16 pour des vis de fixation pour relier par un tube d'admission d'air (non représenté) le collecteur d'échappement 12 à une pompe à air (non représentée).

Selon la figure 2, le collecteur d'échappement 12 comprend une chambre de collecte des gaz d'échappement 19 et une chambre d'admission d'air 18 formée par une cavité aménagée dans le collecteur d'échappement, en dessous de la chambre de collecte de gaz. La chambre 18 s'étend longitudinalement selon l'axe X sensiblement orthogonal aux conduits de sortie des gaz d'échappement. La chambre 18 comprend un orifice d'entrée 17 relié au conduit d'entrée 35, une paroi de fond 32, une paroi latérale supérieure 33 aménagée en dessous de la chambre de collecte de gaz 19 et une paroi latérale inférieure 34. La section de passage d'air dans la chambre 18 est de forme sensiblement rectangulaire de l'ordre de 11 mm x 9mm. Elle est sensiblement modifiée tout au long de la chambre 18 pour tenir compte des trous traversant 20 de fixation des vis 14 du collecteur à la culasse. Des orifices 21 et 22 de sortie d'air vers des conduits d'échappement sont aménagés dans le collecteur d'échappement 12 aux deux extrémités de la chambre d'admission d'air 18 par moulage.

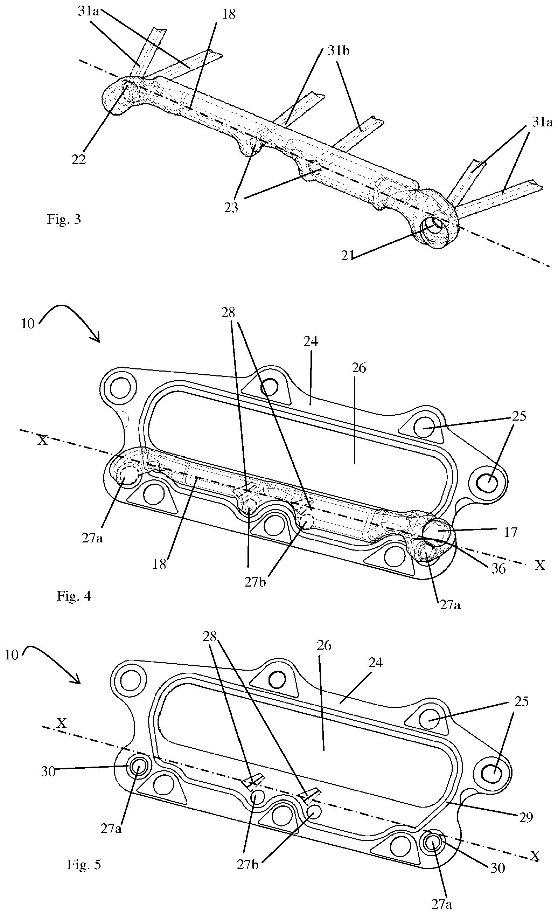

Selon la figure 3, la chambre d'admission d'air 18 (représentée en positif) est connectée à des conduits 31a et 31b d'admission d'air aménagés dans la culasse 13 (non représentée dans cette figure) pour amener l'air vers des conduits de gaz d'échappement au plus proche des soupapes d'échappement (non représentées) qui sont disposées au dessus des cylindres (non représentés). Chaque cylindre comportant deux soupapes d'échappement, deux conduits d'admission 31a, 31b d'air sont ainsi réalisés dans la culasse par cylindre, par exemple par perçage ou obtenus par moulage. Les conduits 31a d'admission d'air peuvent également se rejoindre dans la culasse permettant de diminuer le nombre d'orifices 21, 22 de sortie d'air depuis la chambre d'admission d'air 18.

Selon les figures 4 et 5, la chambre 18 est fermée par une paroi 24 comportant des lumières 25 de passage pour les vis de fixation 14, une lumière 26 en regard avec la chambre de collecte des gaz 19 et des lumières d'extrémité 27a et médians 27b en regard respectivement avec les orifices des conduits d'admission 31a et 31b aménagés dans la culasse 13. La paroi 24 comporte une nervure d'étanchéité 29 entourant la lumière 26 débouchant dans la chambre 19 de collecte de gaz et les lumières 27b en regard avec des conduits 31b médians d'admission d'air dans la culasse. Les lumières 27a en regard avec des conduits d'extrémité 31a d'admission d'air sont entourés de manière préférentielle par une nervure d'étanchéité circulaire 30.

La paroi 24 est un joint d'étanchéité réalisé en acier. La paroi 24 comporte des moyens pour obstruer partiellement la section de passage d'air dans la chambre 18. Ces moyens sont des déflecteurs constitués de parois d'obstruction 28 au moins partiellement transversales par rapport à l'axe de la chambre et dont les dimensions sont de l'ordre de 9mm x 6 mm. Lesdites parois 28 sont inclinées contre le sens d'écoulement d'air vers l'entrée d'air 17 et s'étendent depuis une paroi latérale de la chambre 18, à proximité d'un orifice de sortie 23 et en aval de l'endroit où se trouve l'orifice.

Le collecteur 12 est obtenu par moulage sable. Le moule comporte un premier moule sable qui réalise la surface externe du collecteur d'échappement 12, un deuxième moule qui réalise la surface interne de la chambre de collecte 19 et un troisième moule qui réalise la chambre 18 d'admission d'air ainsi que le conduit 35 d'entrée d'air, disposé en dessous du deuxième moule de la chambre de collecte.

La paroi 24 peut être composée par un assemblage de plaques de tôle. Une plaque en contact avec l'air peut être découpée selon la surface d'obstruction désirée et rabattue pour être inclinée selon l'axe X.

La paroi 24 est disposée plaquée entre la culasse 13 et le collecteur d'échappement 12 qui sont fixés l'un à l'autre par des vis 14 passant par les trous de fixation 20. Une pompe à air (non représentée) est connectée par une conduite à l'entrée d'air 17 de la chambre 18. Une partie de l'air est d'abord dirigée dans un conduit 36 obtenu par moulage vers le premier orifice d'extrémité 21 situé à proximité de l'entrée 17 de la chambre 18, en regard avec un conduit d'admission 31a d'air aménagé dans la culasse 13. La partie restante est envoyée dans la chambre 18. Au niveau d'un orifice médian 23, la section de passage d'air est obstruée partiellement par une paroi transversale 28 inclinée contre le sens d'écoulement et destinée à diriger une partie de l'air vers l'orifice de sortie 23 en regard avec un conduit d'admission médian 31b. La partie restante d'air est ensuite dirigée vers le deuxième orifice d'extrémité 22.

L'invention n'est pas restreinte au mode de réalisation présenté ci-avant. D'autres modes de réalisation peuvent être suggérés dans l'esprit de l'homme du métier pour diriger le flot d'air vers les orifices de sortie, par exemple : les parois d'obstruction peuvent également être réalisées en acier et soudées sur la paroi 21 ou les parois d'obstruction peuvent être également obtenues avec la paroi 21 d'une seule pièce par moulage.

## Revendications

1. Système (10) d'admission d'air à l'échappement d'un moteur à combustion interne comprenant un collecteur d'échappement fixé à une culasse (13) comportant une chambre d'admission (18) longitudinale, disposée transversalement à l'écoulement des gaz d'échappement et fermée par une paroi rapportée (24), qui comporte une entrée d'air à une extrémité (17) et des orifices de sortie le long de la chambre vers des conduits (31a, 31b) d'admission d'air,
**caractérisé en ce qu'**au moins une section de passage d'air dans la chambre d'admission (18) à proximité et en aval de l'endroit où se trouve un orifice (23) est partiellement obstruée par une paroi d'obstruction (28) au moins partiellement transversale au sens d'écoulement d'air et inclinée contre le sens d'écoulement d'air, vers l'entrée d'air, grâce à quoi l'air est dirigé vers l'orifice (23) de sortie.

2. Système (10) d'admission d'air selon la revendication 1, **caractérisé en ce que** la chambre d'admission (18) est formée par une cavité aménagée dans le collecteur d'échappement (12).

3. Système (10) d'admission d'air selon l'une quelconque des revendications 1 ou 2, **caractérisé en ce que** la paroi d'obstruction (28) s'étend depuis une paroi latérale de la chambre d'admission (18) à proximité et en aval de l'endroit où se trouve l'orifice (23) de sortie.

4. Système (10) d'admission d'air selon l'une quelconque des revendications 1 à 3, **caractérisé en ce que** la paroi d'obstruction (28) est rapportée sur la paroi rapportée (24) fermant la chambre d'admission (18).

5. Système (10) d'admission d'air selon l'une quelconque des revendications 1 à 4, **caractérisé en ce que** la paroi d'obstruction (28) et la paroi (24) fermant la chambre (18) sont réalisées en une seule pièce.

6. Système (10) d'admission d'air selon l'une quelconque des revendications 1 à 5, **caractérisé en ce que** la paroi (24) rapportée fermant la chambre (18) est réalisée par un joint d'étanchéité, le joint étant réalisé en acier et disposé entre le collecteur d'échappement (12) et la culasse (13).

7. Système (10) d'admission d'air selon la revendication 6, caractérisé en ce la paroi (24) comprend une nervure d'étanchéité (29, 30) entourant des lumières (27a, 27b) en regard des conduits d'admission d'air.

8. Moteur à combustion interne comprenant un système d'admission d'air à l'échappement selon l'une quelconque des revendications1-7 précédentes.

## Patentansprüche

1. System (10) zum Ansaugen von Luft ins Abgas eines Verbrennungsmotors, umfassend einen Abgaskrümmer, der an einem Zylinderkopf (13) befestigt ist, der eine longitudinale Einlasskammer (18) aufweist, die quer zu der Abgasströmung angeordnet ist und durch eine aufgesetzte Wand (24) geschlossen ist, die einen Lufteinlass an einem Ende (17) und Auslassöffnungen entlang der Kammer in Richtung von Lufteinlassleitungen (31a, 31b) aufweist,
**dadurch gekennzeichnet, dass** mindestens ein Luftdurchgangsquerschnitt in der Einlasskammer (18) in der Nähe und nachgelagert nach der Stelle, an der sich eine Öffnung (23) befindet, teilweise von einer Sperrwand (28), die mindestens teilweise quer zur Strömungsrichtung der Luft ist und gegen die Strömungsrichtung der Luft geneigt ist, in Richtung des Lufteinlasses versperrt ist, wodurch die Luft in Richtung der Auslassöffnung (23) geleitet wird.

2. System (10) zum Ansaugen von Luft nach Anspruch 1, **dadurch gekennzeichnet, dass** die Einlasskammer (18) durch einen Hohlraum gebildet ist, der in dem Abgaskrümmer (12) ausgebildet ist.

3. System (10) zum Ansaugen von Luft nach einem der Ansprüche 1 oder 2, **dadurch gekennzeichnet, dass** sich die Sperrwand (28) von einer Seitenwand der Einlasskammer (18) in der Nähe und nachgelagert nach der Stelle, an der sich eine Auslassöffnung (23) befindet, erstreckt.

4. System (10) zum Ansaugen von Luft nach einem der Ansprüche 1 bis 3, **dadurch gekennzeichnet, dass** die Sperrwand (28) auf der aufgesetzten Wand (24), die die Einlasskammer (18) schließt, aufgesetzt ist.

5. System (10) zum Ansaugen von Luft nach einem der Ansprüche 1 bis 4, **dadurch gekennzeichnet, dass** die Sperrwand (28) und die Wand (24), die die Kammer (18) schließt, aus einem einzigen Stück hergestellt sind.

6. System (10) zum Ansaugen von Luft nach einem der Ansprüche 1 bis 5, **dadurch gekennzeichnet, dass** die aufgesetzte Wand (24), die die Kammer (18) schließt, durch eine Dichtung erstellt ist, wobei die Dichtung aus Stahl hergestellt ist und zwischen dem Abgaskrümmer (12) und dem Zylinderkopf (13) angeordnet ist.

7. System (10) zum Ansaugen von Luft nach Anspruch 6, **dadurch gekennzeichnet, dass** die Wand (24) eine Dichtrippe (29, 30) aufweist, die Öffnungen (27a, 27b) gegenüber von den Lufteinlassleitungen umgibt.

8. Verbrennungsmotor, umfassend ein System zum Ansaugen von Luft ins Abgas nach einem der vorhergehenden Ansprüche 1 bis 7.

## Claims

1. Air intake system (10) to the exhaust of an internal combustion engine comprising an exhaust manifold fixed to a cylinder head (13) comprising a longitudinal intake chamber (18), disposed transversely to the flow of the exhaust gases and closed by an added-on wall (24), which comprises an air inlet at one end (17) and outlet orifices along the chamber to air intake ducts (31a, 31b),
**characterized in that** at least one air passage section in the intake chamber (18) in proximity to and downstream of the point where an orifice (23) is located, is partially obstructed by an obstruction wall (28) at least partially transversal to the direction of air flow and inclined against the direction of air flow, towards the air inlet, by virtue of which the air is directed towards the outlet orifice (23).

2. Air intake system (10) according to Claim 1, **characterized in that** the intake chamber (18) is formed by a cavity formed in the exhaust manifold (12).

3. Air intake system (10) according to either one of Claims 1 or 2, **characterized in that** the obstruction wall (28) extends from a lateral wall of the intake chamber (18) in proximity to and downstream of the point where the outlet orifice (23) is located.

4. Air intake system (10) according to any one of Claims 1 to 3, **characterized in that** the obstruction wall (28) is added onto the added-on wall (24) closing the intake chamber (18).

5. Air intake system (10) according to any one of Claims 1 to 4, **characterized in that** the obstruction wall (28) and the wall (24) closing the chamber (18) are produced in a single piece.

6. Air intake system (10) according to any one of Claims 1 to 5, **characterized in that** the added-on wall (24) closing the chamber (18) is produced by a gasket, the gasket being produced in steel and disposed between the exhaust manifold (12) and the cylinder head (13).

7. Air intake system (10) according to Claim 6, **characterized in that** the wall (24) comprises a sealing rib (29, 30) surrounding openings (27a, 27b) facing the air intake ducts.

8. Internal combustion engine comprising an air intake system to the exhaust according to any one of the preceding Claims 1-7.
